# EUROPEAN PATENT APPLICATION

(11) **EP 1 380 470 A2**
(43) Date of publication of application: **14.01.2004**
(21) Application number: 03014469.5
(22) Date of filing: 01.07.2003
(51) Int. Cl.: B60R 13/10

(54) **Universal registration plate holder**

(30) Priority: 08.07.2002 IT RE20020018 U
(71) Applicant: Meta System S.p.A., 42100 Reggio Emilia (IT)
(72) Inventor: Simonazzi, Giuseppe, 42100 Reggio Emilia (IT)
(74) Representative: Modiano, Guido, Dr.-Ing.

(57) **Abstract**

A universal registration plate holder for motor vehicles comprising a base frame (1), multiple intermediate adaptor elements (4-8); along the peripheral region of the frame supports (13) are provided for containing control elements, such as miniature TV cameras and/or ultrasound, infrared, microwave reversing sensors and the like; the lower part of the frame comprises a border (15) that can be made of transparent material and in which it is possible to include LEDs and/or lamps (16), which can be connected to the parking lamps or stop lights of the motor vehicles.

## Description

The present invention relates to a universal registration plate holder for motor vehicles.

It is known that the provision of peripheral sensors, suitable to be applied to vehicles and intended to perform sensing operations that facilitate driving, is currently not very widespread. This limited diffusion arises from the fact that it is still difficult to establish the best arrangement of the sensors on vehicles without having to resort to specific operations for fixing and/or supporting them on the bodies or bumpers. Each known vehicle in fact has different coupling or flush-mounting points for the sensors, which require the provision of holes and/or various manufacturing interventions, which in addition to not being appreciated by users are often difficult to perform due to the insufficient space available.

More recently, custom registration plate holders have been provided for specific motor vehicle models on which dedicated receptacles or mechanical supports are provided which are suitable to contain said peripheral sensors, such as distance sensors, external transducers, miniature TV cameras, and the like.

These kinds of registration plate holder, while facilitating the diffusion of these applications, still suffer the drawback of forcing manufacturers to produce wide ranges of models, having different shapes and structures, which are designed to allow both application to all commercially available vehicle types and any specific demands and/or requests of customers.

The aim of the present invention is to eliminate the above-mentioned drawbacks, by providing a universal registration plate holder, by means of which the following results are achieved: while complying with the conventional shape and dimensions of the registration plate containment portion, the registration plate holder is provided with holes, slots, ridges and/or intermediate points of adaptation and retention that allow to apply it to any kind of vehicle and are capable of containing and retaining the most common types of registration plate of various nationalities. In the peripheral regions, the registration plate holder comprises means, of the interlocking and coupling type, for the temporary fixing of supports for containment cartridges that hold electronic devices and/or apparatuses and/or parts thereof, such as distance sensors, external transducers, miniature TV cameras, and the like.

The advantages obtained by means of the present invention substantially consist in that a single registration plate holder can be applied to any kind of vehicle without having to provide additional holes in the body or in the bumpers. Another advantage is that the presence of the sensors can be of any kind, depending on the possible combinations and/or requirements of customers.

The invention is described in detail hereinafter according to an embodiment thereof given merely by way of non-limitative example with reference to the accompanying drawings, wherein:

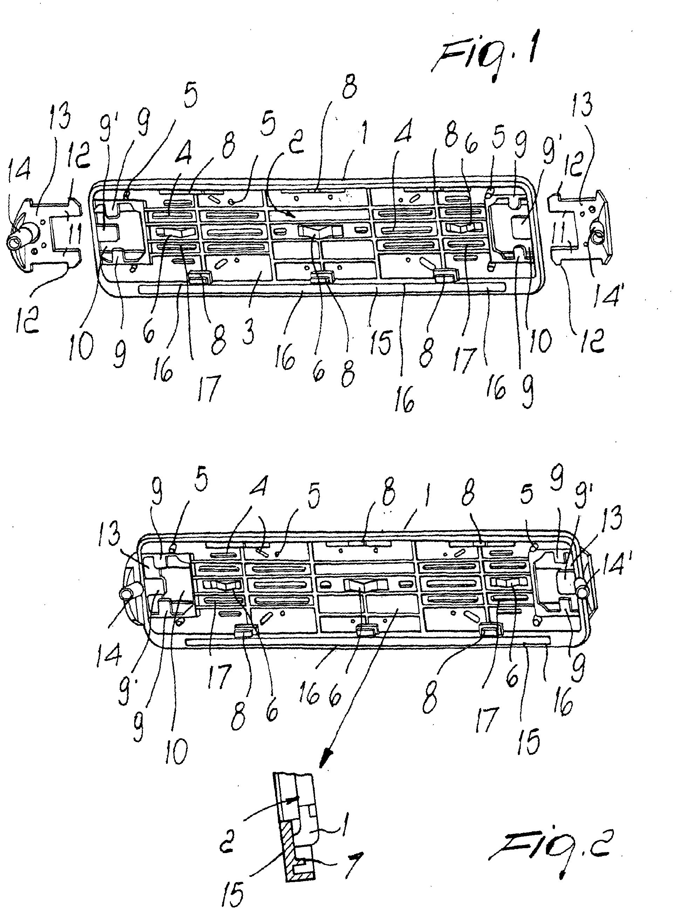

Figure 1 is a schematic perspective view of the registration plate holder with lateral interchangeable supports aligned for assembly;

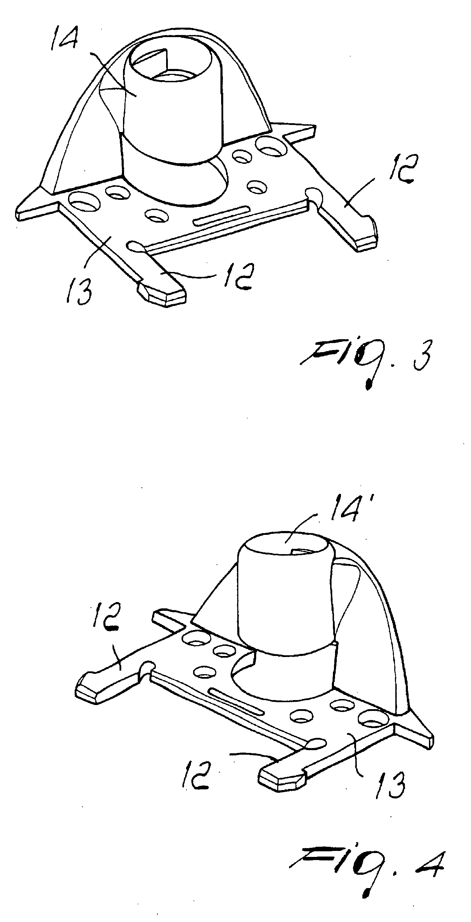

Figure 2 is a schematic perspective view of the registration plate holder of Figure 1, with the lateral interchangeable supports assembled, and with a partial transverse sectional view of its lower edge;
Figure 3 is a schematic perspective view of a type of lateral interchangeable support; and
Figure 4 is a schematic perspective view of another type of lateral interchangeable support.

With reference to the figures, the registration plate holder is substantially constituted by a base frame 1 with a central seat 2 in which any kind of conventional horizontally elongated rectangular registration plate is accommodated.

Means for positioning and retaining the registration plates are formed at a bottom 3 of the central seat 2 and are constituted by slots 4, holes 5, elastic laminas 6 for containment by pressure, ridges 7 and teeth 8; the ridges 7 and the teeth 8 are of the removable type.

At the peripheral portion of the frame 1 there are instead means for temporarily fixing interchangeable supports, which are constituted by teeth 9 that are associated with guiding tabs 9' and by interlocking seats 10 that engage lateral guides 11 provided with retention teeth 12 and formed in interchangeable supports 13.

Further slots 17 are provided at the central seat 2. Seats 14,14' are integrated on the interchangeable supports 13 and are provided with means of the rapid press-together type for engagement with sensing means such as electronic devices and/or apparatuses and/or parts thereof, distance sensors, external transducers, miniature TV cameras, and the like.

A lower edge 15 of the frame 1 can instead be made of transparent material, with provisions for its use as a support for a LED 16 or series of LEDs 16 or lamps 16, which can be connected to the stop lights or parking lamps of motor vehicles.

In the complete configuration, the seat 2 is preset for the application of Italian or French registration plates; by removing the teeth 8, the seat 2 is preset to contain German registration plates; by removing the ridge 7, the seat 2 is preset to contain the second type of French registration plate, and so forth for other parts and other types of registration plate.

The holes 5 and the slots 6 can be used to couple the frame 1 to any type of vehicle and to couple any type of registration plate.

Although the present invention has been described and illustrated according to one embodiment, given merely by way of non-limitative example, it is evident to the person skilled in the art that various modifications to the shapes, details, orientations, combinations of the engagement means and/or arrangement means and to the assemblies may be provided without thereby abandoning the scope of the appended claims.

The disclosures in Italian Utility Model Application No. RE2002U000018 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A universal registration plate holder, **characterized in that** it is constituted by a base frame (1) in which there is a central seat (2) for the placement of any type of conventional horizontally elongated rectangular registration plate, means for positioning and retaining the registration plates being formed on a bottom (3) of the central seat (2), means for the temporary fixing of interchangeable supports (13) being formed at the peripheral portion of the frame (1), said supports (13) comprising seats (14, 14') provided with means for the engagement of sensing means, electronic devices and/or apparatuses and/or parts thereof, distance sensors, external transducers, miniature TV cameras, and the like.

2. The universal registration plate holder according to claim 1, **characterized in that** said means for positioning and retaining the registration plates comprise slots (4), holes (5), elastic laminas (6) for containment by pressure, ridges (7) and teeth (8).

3. The universal registration plate holder according to claim 2, **characterized in that** said ridges (7) and said teeth (8) are of the removable type.

4. The universal registration plate holder according to one or more of the preceding claims, **characterized in that** said temporary fixing means comprise teeth (9), which are associated with guiding tabs (9'), and interlocking seats (10), which are formed in the frame (1) and engage lateral guides (11) provided with retention teeth (12) and formed in the interchangeable supports (13).

5. The universal registration plate holder according to one or more of the preceding claims, **characterized in that** said engagement means are of the quick press-together type.

6. The universal registration plate holder according to one or more of the preceding claims, **characterized in that** the frame (1) comprises a lower edge (15) made of transparent material and preset to constitute the support for LEDs (16) or series of lamps (16) that can be connected to the stop lights or to the parking lamps of motor vehicles.

7. The universal registration plate holder according to one or more of the preceding claims, **characterized in that** the interchangeable supports (13), which comprise seats (14, 14') provided with means for engaging sensing means, are applied to the frame (1) at will, depending on the possible combinations of said sensing means and/or according to specific requirements of vehicle manufacturers and/or buyers.
